# EUROPEAN PATENT APPLICATION

(11) **EP 4 145 204 A1**
(43) Date of publication of application: **08.03.2023**
(21) Application number: 22191875.8
(22) Date of filing: 24.08.2022
(51) Int. Cl.: G02B 7/08, G02B 7/105

(54) **A LENS UNIT OF AN IMAGING ASSEMBLY**

(30) Priority: 03.09.2021 US 202117446914
(71) Applicant: Hand Held Products, Inc., Fort Mill, SC 29707 (US)
(72) Inventor: SABER, Kevin, Charlotte, 28202 (US); VAN HORN, Erik, Charlotte, 28202 (US)
(74) Representative: Haseltine Lake Kempner LLP

(57) **Abstract**

An imaging assembly including a housing, a lens unit mounted within the housing. The lens unit includes at least one lens positioned along an optical axis and one or more ball bearings attached to the lens unit to slideably displace the lens unit within the housing along the optical axis. A calibration mechanism positioned at one end of housing to calibrate the at least one lens by positioning the lens unit at an optimal focal position, wherein the calibration mechanism is rotated to slidably displace the lens unit and position the lens unit at the optimal focal position, and wherein the optimal focal position is one of a near-field focal position or a far-field focal position.

## Description

### TECHNOLOGICAL FIELD

Example embodiments of the present invention relate generally to a lens unit of an imaging assembly, and, more particularly, to a mechanism for calibrating a focal position of the lens within the lens unit.

### BACKGROUND

Imaging assemblies/modules are used with many electronic devices such as mobile phones, personal data assistants (PDAs), computers, barcode readers and the like. Recently, there have been numerous developments in field of imaging technology which have rendered the imaging modules to be small, reliable, easy to use, and robust. Typically, however, imaging module implementations in the electronic devices suffer from a variety of constraints, for example, size, cost and complexity which has impelled the need for an imaging module design that allows for low manufacturing cost with less complex hardware, while maintaining the quality of the images at a high standard. Further, one or more lenses used in the imaging modules may require calibration. Through applied effort, ingenuity, and innovation, many of these identified problems have been solved by developing solutions that are included in embodiments of the present disclosure, many examples of which are described in detail herein.

### SUMMARY

The following presents a simplified summary to provide a basic understanding of some aspects of the disclosed material handling system. This summary is not an extensive overview and is intended to neither identify key or critical elements nor delineate the scope of such elements. Its purpose is to present some concepts of the described features in a simplified form as a prelude to the more detailed description that is presented later.

Various example embodiments described herein relate to an optical apparatus including an image sensor and an imaging assembly to focus an optical radiation from a target on to the image sensor. The imaging assembly includes a housing and a lens unit configured to be actuated to one of a far-field focal position and a near-field focal position by applying a magnetic force. The lens unit includes one or more ball bearings attached to the lens unit to slideably displace the lens unit within the housing along an optical axis in response to the magnetic force. The imaging assembly further comprises a first nut and a second nut rotatably attached to the housing. The far-field focal position and the near-field focal position of the lens unit is calibrated based on the position of the first nut and the second nut.

Various example embodiments described herein relate to an optical apparatus, wherein the housing comprises: one or more guide tracks to guide the one or more ball bearings.

Various example embodiments described herein relate to an optical apparatus, wherein the imaging assembly further comprises: a drive mechanism comprising one or more coils attached to the housing and one or more magnets attached to the lens unit, wherein the coils and the magnets are energized at selected voltage levels to produce the magnetic force.

Various example embodiments described herein relate to an optical apparatus, wherein the one or more ball bearings is rotatably attached to one or more dents formed integrally on an outer portion of the lens unit.

Various example embodiments described herein relate to an optical apparatus, wherein the lens unit further comprises: an optical filter positioned along the optical axis with the at least one lens to pass the optical radiation of pre-defined wavelength.

Various example embodiments described herein relate to an imaging assembly including a housing, a lens unit mounted within the housing. The lens unit includes at least one lens positioned along an optical axis and one or more ball bearings attached to the lens unit to slideably displace the lens unit within the housing along the optical axis. A calibration mechanism positioned at one end of housing to calibrate the at least one lens by positioning the lens unit at an optimal focal position, wherein the calibration mechanism is rotated to slidably displace the lens unit and position the lens unit at the optimal focal position, and wherein the optimal focal position is one of a near-field focal position or a far-field focal position.

Various example embodiments described herein relate to an imaging assembly including a drive mechanism comprising one or more coils attached to the housing and one or more magnets attached to the lens unit.

Various example embodiments described herein relate to an imaging assembly, wherein the one or more ball bearings to linearly displace the lens unit along the optical axis in response to one of a magnetic force or a gravitational force, wherein the magnetic force is induced by selectively energizing the coils and the magnets.

Various example embodiments described herein relate to a method for pre-calibrating and positioning a lens unit of an imaging assembly at an optimal focal position. The method includes displacing the imaging assembly at a first position to slide the lens unit along the optical axis under gravity towards a calibration mechanism and rotating the calibration mechanism while abutting the lens unit to calibrate the optimal focal position of the lens unit. The optimal focal position is one of a near-field focal position or a far-field focal position. The method further includes displacing the imaging assembly at a second position and applying a magnetic force to the lens unit to slide the lens unit from a default focal position to the calibrated optimal focal position in response to a location of the target being captured by the imaging assembly.

Various example embodiments described herein relate to a method for pre-calibrating and positioning a lens unit of an imaging assembly at an optimal focal position, wherein applying the magnetic force further comprises selectively energizing coils and magnets positioned within a housing of the imaging assembly.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which will be further described below.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates a block diagram of an exemplary imaging system, in accordance with an embodiment of the present subject matter
FIG. 2 illustrates a fragmentary partially cutaway side view of an exemplary optical apparatus having an imaging assembly, in accordance with an embodiment of the present subject matter.
FIG. 3 illustrates a block schematic diagram of an exemplary optical apparatus, in accordance with an embodiment of the present subject matter.
FIG. 4 illustrates an exploded view of the imaging assembly, in accordance with an embodiment of the present subject matter.
FIGS. 5A and 5B illustrate perspective views of a housing of the imaging assembly, in accordance with an embodiment of the present subject matter.
FIG. 6 illustrates a perspective view of a calibration mechanism attached to the housing of the imaging assembly, in accordance with an embodiment of the present subject matter.
FIG. 7 illustrates a perspective view of the imaging assembly with components discussed in conjunction with FIGS. 4, 5 and 6 in an assembled form, in accordance with an embodiment of the present subject matter.
FIG. 8 illustrates a fragmentary partially cutaway view of the imaging assembly of FIG. 7 in the assembled form showing one or more optical components positioned within an inner portion of the lens unit, in accordance with an embodiment of the present subject matter.
FIGS. 9A-9E illustrate a block schematic diagram depicting exemplary calibration method of the imaging assembly discussed in conjunction with FIGS. 7 and 8, in accordance with an embodiment of the present subject matter.
FIG. 10 illustrates a perspective view of a dual-mode imaging system of an exemplary optical apparatus employing the imaging assembly of FIG.4, in accordance with an embodiment of the present subject matter.
FIG. 11 illustrates a flowchart of an exemplary method of for pre-calibrating and positioning a lens unit of an imaging assembly at an optimal focal position, in accordance with an embodiment of the present subject matter

### DETAILED DESCRIPTION

Some embodiments of the present invention will now be described more fully hereinafter with reference to the accompanying drawings, in which some, but not all embodiments of the inventions are shown. Indeed, the disclosure may be embodied in many different forms and should not be construed as limited to the embodiments set forth herein; rather, these embodiments are provided so that this disclosure will satisfy applicable legal requirements. The terms "or" and "optionally" are used herein in both the alternative and conjunctive sense, unless otherwise indicated. The terms "illustrative" and "exemplary" are used to be examples with no indication of quality level. Like numbers refer to like elements throughout.

The components illustrated in the figures represent components that may or may not be present in various embodiments of the invention described herein such that embodiments may include fewer or more components than those shown in the figures while not departing from the scope of the invention.

Turning now to the drawings, the detailed description set forth below in connection with the appended drawings is intended as a description of various configurations and is not intended to represent the only configurations in which the concepts described herein may be practiced. The detailed description includes specific details for the purpose of providing a thorough understanding of various concepts with like numerals denote like components throughout the several views. However, it will be apparent to those skilled in the art that these concepts may be practiced without these specific details.

The term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of. Furthermore, to the extent that the terms "includes" and "including", and variants thereof are used in either the detailed description or the claims, these terms are intended to be inclusive in a manner similar to the term "comprising."

References within the specification to "one embodiment," "an embodiment," "embodiments", or "one or more embodiments" are intended to indicate that a particular feature, structure, or characteristic described in connection with the embodiment is included in at least one embodiment of the present disclosure. The appearance of such phrases in various places within the specification are not necessarily all referring to the same embodiment, nor are separate or alternative embodiments mutually exclusive of other embodiments. Further, various features are described which may be exhibited by some embodiments and not by others. Similarly, various requirements are described which may be requirements for some embodiments but not other embodiments.

Moreover, the word "exemplary" is used herein to mean "serving as an example, instance, or illustration." Any implementation, aspect, or design described herein as "exemplary" is not necessarily to be construed as preferred or advantageous over other implementations, aspects, or designs. Rather, use of the word exemplary is intended to present concepts in a concrete fashion.

It is understood that the use of specific component, device and/or parameter names and/or corresponding acronyms thereof, such as those of the executing utility, logic, and/or firmware described herein, are for example only and not meant to imply any limitations on the described embodiments. The embodiments may thus be described with different nomenclature and/or terminology utilized to describe the components, devices, parameters, methods and/or functions herein, without limitation. References to any specific protocol or proprietary name in describing one or more elements, features or concepts of the embodiments are provided solely as examples of one implementation, and such references do not limit the extension of the claimed embodiments to embodiments in which different element, feature, protocol, or concept names are utilized. Thus, each term utilized herein is to be given its broadest interpretation given the context in which that terms is utilized.

In particular and in regard to the various functions performed by the above described components, devices, circuits, systems and the like, the terms (including a reference to a "means") used to describe such component are intended to correspond, unless otherwise indicated, to any component which performs the specified function of the described component (e.g., a functional equivalent), even though not structurally equivalent to the disclosed structure, which performs the function in the herein illustrated example aspect of the embodiments. In this regard, it will also be recognized that the embodiments comprise a system as well as a computer-readable medium having computer-executable instruction for performing the acts and/or events of the various methods.

Reference will now be made to exemplary embodiments which are illustrated in the accompanying drawings. Other embodiments may be in various forms and the exemplary embodiments should not be construed as limited to the embodiments set forth herein. Rather, these representative embodiments are described in detail so that this disclosure will be thorough and complete, and will fully convey the scope, structure, operation, functionality, and potential applicability to those skilled in the art. Wherever possible, the same reference numbers will be used throughout the drawings to refer to the same or like parts. The term "scan" or "scanning" used herein refers to imaging or extracting data from an information bearing optical (or symbol). The term imaging used herein refers to the taking, capturing or creation of an electronic image.

One or more lenses used in an imaging module may require calibration to maintain the lenses at an optimal focal position (e.g., a near field calibration, a far field calibration, or the like). Typical calibration involves the lenses being positioned to a specific location on the imaging module at a distance to an image sensor to establish the optimal focal position. Conventionally, such a calibration is performed via manual process where the lenses are secured via clamp, translation feature or pin feature and adjusted manually. Such a manual calibration is a laborious task in which optical components within imaging module may be subjected to an external force leading to distortion of the lenses, which in turn results in poor or instable focal position. Further, the manual calibration using additional hardware such as clamp, translation feature or pin feature adds up to the cost and complexity of the imaging module.

In some examples and as disclosed herein, imaging assemblies employ a design with fewer components for calibration which includes a housing, a lens unit mounted within the housing, one or more ball bearings, and a calibration mechanism. The lens unit includes at least one lens positioned along an optical axis and the one or more ball bearings attached to the lens unit to slideably displace the lens unit within the housing along the optical axis. The calibration mechanism positioned at one end of housing to calibrate the at least one lens by positioning the lens unit at an optimal focal position, wherein the calibration mechanism is rotated while abutting the lens unit to slidably displace the lens unit using the one or more ball bearings until the lens unit is at the optimal focal position, and wherein the optimal focal position is one of a near-field focal position or a far-field focal position. The position of the calibration mechanism is maintained for future use during operation.

In some examples, a far-field focal position and a near-field focal position of the lens unit in a housing is pre-set or calibrated by the calibration mechanism, which includes a first nut and a second nut rotatably attached to the housing. As such, when the lens unit is urged to the front or the rear of the housing during calibration, rotation of the first nut and the second nut moves the lens unit to a position where a focal point of the optical radiation is in alignment with the image sensor. The position of the front nut and/or the rear nut are retained so as to allow the lens unit, in operation, to be move to the front nut (near-field focal position) or the rear nut (far-field focal position).

In some examples, the imaging assembly further comprises: a drive mechanism comprising one or more coils attached to the housing and one or more magnets attached to the lens unit, wherein the coils and the magnets are energized at selected voltage levels to produce a magnetic force to actuate the lens unit to one of the rear nut or rear stop (far-field focal position) and the front nut or front stop (near-field focal position).

In accordance with the examples herein, an imaging assembly with optimal focal position adjustments using less complex hardware for calibration has been achieved.

In the following detailed description of exemplary embodiments of the disclosure, specific representative embodiments in which the disclosure may be practiced are described in sufficient detail to enable those skilled in the art to practice the disclosed embodiments. For example, specific details such as specific method orders, structures, elements, and connections have been presented herein. However, it is to be understood that the specific details presented need not be utilized to practice embodiments of the present disclosure. It is also to be understood that other embodiments may be utilized and that logical, architectural, programmatic, mechanical, electrical and other changes may be made without departing from the general scope of the disclosure. The following detailed description is, therefore, not to be taken in a limiting sense, and the scope of the present disclosure is defined by the appended claims and equivalents thereof.

Throughout this specification, the terms 'optical imagers' or 'optical apparatus' may be used interchangeably and these terms should be taken as an example of any apparatus which can be configured to capture one or more target images.

As used herein, the term "imaging assembly" may collectively refer one or more components that facilitates focusing of optical radiation or light from a target to an image sensor. Thus, use of any such terms should not be taken to limit the spirit and scope of embodiments of the present disclosure.

As used herein, the term "imaging system" may collectively refer to a system in which one or more optical apparatus are available with each optical apparatus having the "imaging assembly" described in conjunction with one or more embodiments. Thus, use of any such terms should not be taken to limit the spirit and scope of embodiments of the present disclosure.

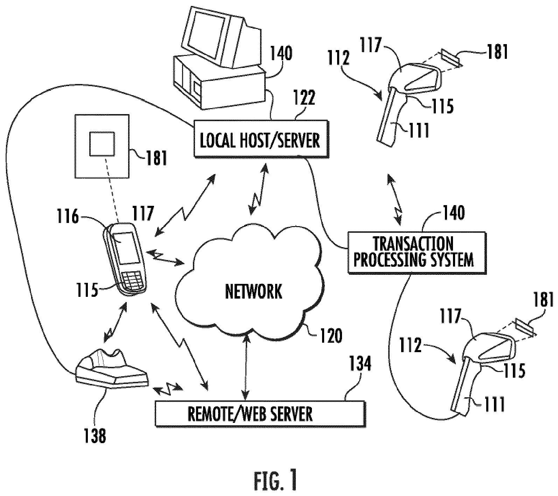

Referring now specifically to the drawings and the illustrative embodiments depicted therein, FIG. 1 illustrates a block diagram of an exemplary imaging system 100, in accordance with an embodiment of the present subject matter. The imaging system 100 includes a plurality of optical apparatus or imagers 112 which may be operated and utilized where information bearing optical (IBI) are present. The optical apparatus or imagers 112 may be stationary or hand-held devices, utilizing image capturing devices for extracting data from targets. An operator may aim a hand-held optical imager 112 at a target and actuate a button or trigger 115 on the optical imager 112 to control full or partial operation of the imager 112. The imager 112 may be utilized in a presentation mode, wherein the imager 112 takes consecutive images without the need for trigger activation. An exemplary optical imager 112 may be a mobile device, such as a handheld scanner, a portable data terminal (PDT), personal digital assistant (PDA), mobile phone, etc. A Portable Data Terminal, or PDT, is typically an electronic device that is used to enter or retrieve data via wireless transmission (WLAN or WWAN) and may also serve as an optical imager used in stores, warehouse, hospital, or in the field to access a database from a remote location. Personal Digital Assistants (PDAs) are handheld devices typically used as a personal organizer, and may have many uses such as calculating, use as a clock and calendar, playing computer games, accessing the Internet, sending and receiving E-mails, use as a radio or stereo, video recording, recording notes, use as an address book, etc. An exemplary optical imager 112 may have a display 116. An exemplary optical imager 112 may have a number of subsystems provided within a housing 117 configured to be handheld. For example, the imager may have a handle portion 111. Exemplary optical imagers 112 may be in communication (wired or wireless) to a local transaction processing system 140, such as a cash register, customer station or employee station or local host/server 125 directly or through a charging station or base 138. An exemplary local server 125 or optical imager 112 may be in communication with network 120 and or a remote/web server 134.

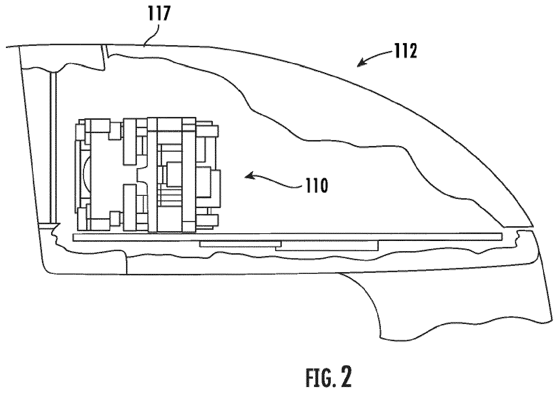

FIG. 2 illustrates an enlarged fragmentary cross-sectional view of an exemplary optical apparatus or optical imager 112 which may include an imaging assembly 110 packaged in an imager frame 117.

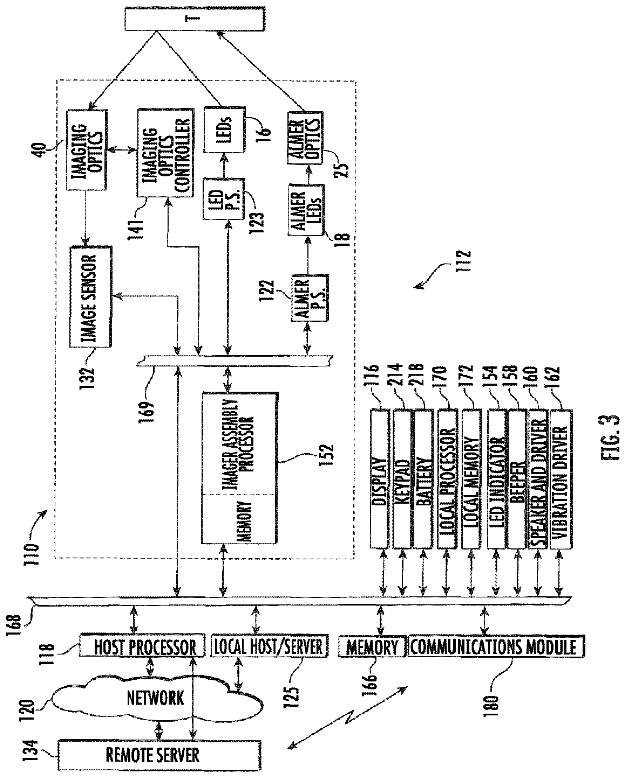

Referring to FIG. 3, an exemplary imaging system may include an imaging assembly 110 which may include an image sensor 132. An exemplary image sensor 132 converts light or other electromagnetic energy reflected off of a target and provides an output signal representative thereof. Image sensors 132 may be an array of pixels adapted to operate in a global shutter or full frame shutter mode or alternately operate in a rolling shutter mode. It may be a color or monochrome 2D solid state image sensor implemented in any of CCD, CMOS, NMOS, PMOS, CID, CMD, back-illuminated technologies. The imager 112 may be either a progressive or interleaved imager. The image sensor 132 may contain an array of light sensitive photodiodes (or pixels) that convert incident light energy into electric charge. Many solid-state image sensors also allow regions of a full frame of image data to be addressed. An exemplary image sensor 132 may use a monocolor image sensor that may include a filter element defining color sensitive pixel elements dispersed throughout an array of monochrome pixels. Operation of the monocolor image sensor is to subsample color images (monochrome or full color) utilizing associated optimal sensor settings for image capture or symbology scanning. Exemplary monocolor image sensors are described in U.S. Patent Publication Number 20060274171 entitled DIGITAL PICTURE TAKING OPTICAL IMAGER HAVING HYBRID MONOCHROME AND COLOR IMAGE SENSOR ARRAY the entirety of which is hereby incorporated herein by reference. An exemplary image sensor 132 may include an image sensor processor, an analog to digital converter (ADC) and other circuitry.

Imaging assembly 110 may include a programmable control circuit or imaging device processor 152, which may control the amount of illumination provided by LEDs 16 by controlling the output power provided by LED power supplies 123. Processor 152 may also control other functions and devices, such as aimer power supplies for powering aimer LEDs 18. Processor 152 may include a predetermined amount of memory for storing data and configurable blocks of analog and digital logic, as well as programmable interconnects. Illuminating optics (not shown), aimer optics components 25, (such as lenses, diffusers, wedges, reflectors, etc.) may be utilized for directing light in the direction of a target object T. Laser or light emitting diodes (LEDs) such as white LEDs or red, infrared LEDs may be utilized. Illumination may be eliminated or disabled if ambient light levels are high enough to allow high quality images of object T to be taken. Illumination may also be located remote from the imaging device so as to eliminate or reduce specular reflections.

In an exemplary embodiment, an imaging assembly includes imaging optics 40 for focusing light from a target onto image sensor device 132. Imaging assembly 110 has imaging optics or lens 40 having an optical axis (OA) for receiving light reflected from a target T and directing or projecting the reflected light from the target T to image sensor 132. The optical axis is a line of symmetry through the imaging optics. The imaging optics 40 has a focal point wherein parallel rays of light coming from infinity converge at the focal point. If the focal point is coincident with the image sensor 132, the target (at infinity) is "in focus". A target T is said to be in focus if light from target points are converged about as well as desirable at the image sensor 132. Conversely, it is out of focus if light is not well converged. "Focusing" is the procedure of adjusting the distance between the receive optics and the image sensor 132 to cause the target T to be approximately in focus.

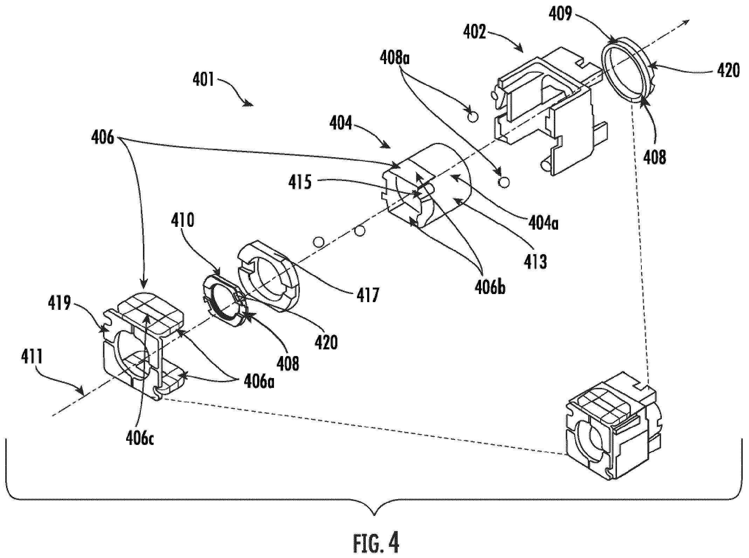

FIG. 4 illustrates an exploded view of the imaging assembly 401, in accordance with an embodiment of the present subject matter. FIG. 4 illustrates a portion of the imaging assembly 110 with optical and non-optical components that enable precise focal calibration. Such portion of the imaging assembly 110 will be referred as the imaging assembly 401 hereinafter throughout the description.

According to an embodiment, the imaging assembly 401 may be positioned within the optical apparatus 112 as previously discussed in conjunction with FIGS. 1 to 3. According to an embodiment, the imaging assembly 401 includes a housing 402, a lens unit 404, one or more ball bearings 408a, a drive mechanism 406 and a calibration mechanism 408.

According to an embodiment, the lens unit 404 is positioned within the housing 402 According to an embodiment, the housing 402 may be formed as a single molded structure with a rear cover 417 and a coil board 419 forming a part of the structure to form a casing. According to an embodiment, the lens unit 404 includes at least one lens positioned along an optical axis 411 to focus an optical radiation from a target on to an image sensor. According to another embodiment, the lens unit 404 includes a pair of lenses 40 to focus the optical radiation. In some examples, the lens unit 404 may further include an optical filter (not shown) which may be positioned along the optical axis 411 of the at least one lens to pass the optical radiation of pre-defined wavelength.

According to an embodiment, the drive mechanism includes one or more magnets 406b and one or more coils 406a wound around an iron core 406c. In some examples, the one or more magnets 406b may form a part of the lens unit 404 and the one or more coils 406a may form a part of the housing 402. The drive mechanism 406 may be capable of driving the lens unit 404 by applying a magnetic force. In some examples, the magnetic force is produced by the energizing the coils 406a wound around the iron core 406c which in turn drives the magnets 406b under a repulsive magnetic force. Moreover and although the example embodiment depicted in FIG. 4 shows a pair of magnets 406b in one-to-one correlation with a pair of coils 406a, other embodiments are possible using other configurations. For example, rather than a pair of magnets 406b, a single magnet 406b corresponding to two or more coils 406a. In some examples, the coils 406a may include a plurality of turns of electrically conductive wire. Electrical signals may be received from one or more circuits attached to the coil board 419 or any electrical circuit at one end of the coil wire and the other end of the coil wire may be grounded.

According to an embodiment, the one or more ball bearings 408a form a part of the lens unit 404. The ball bearings 408a slidably displaces the lens unit 404 within the housing 402 under the influence of the magnetic force or under the influence of a gravitational force. According to an embodiment, the ball bearings are provided such that the lens unit is freely movable inside the housing without any friction during the movement. In some examples, the ball bearings 408a may include a ball cage or bearing blocks to support the balls. Moreover and although the example embodiment depicted in FIG. 4 shows four ball bearings 408a, other embodiments are possible using other configurations in which more than four ball bearings may be employed. In some examples, the lens unit may include one or more dents 415 formed integrally provided along a circumference of an outer portion 413 of the lens unit 404 to receive the one or more ball bearings.

According to an embodiment, the calibration mechanism 408 is configured to calibrate one or more lens positions for the at least one lens by positioning the lens unit at an optimal focal position (e.g., at a near-field focal position or at a far-field focal position). The calibration mechanism 408 may include at least one nut which forms a part of the housing 404. The at least one nut may be rotatable to linearly displace the lens unit 404 using the one or more ball bearings 408a until the lens unit 404 is at the optimal focal position. According to an embodiment, the calibration mechanism 408 includes a first nut 409 and a second nut 410. The optimal focal position of the lens unit 404 is pre-set by a rotation of the first nut 409 and the second nut 410.

According to an embodiment, the position of the first nut is the front stop and the second nut is the rear stop. As such, the front stop and/or the rear stop effectively stop the lens unit at a near-field focal position or at a far-field focal position when the lens unit is being driven away from a home or default position by magnetic force.

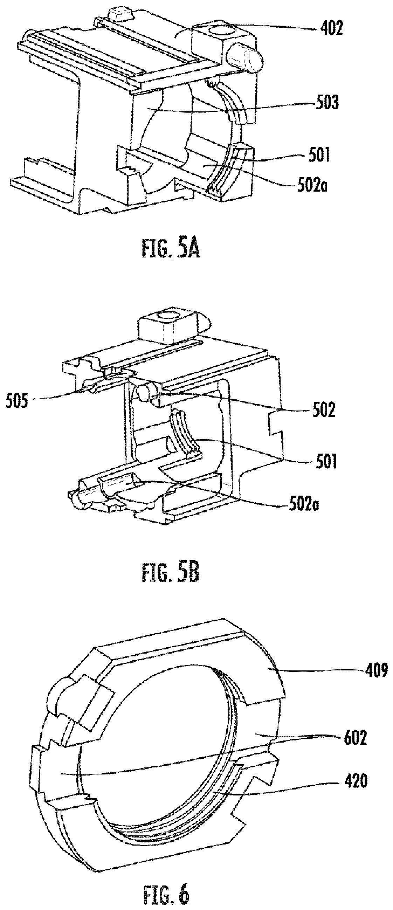

As shown in FIG. 5A and 5B, the housing 402 includes a front end 503, a rear end 505, one or more guide tracks 502a, one or more first threaded portions 501, and one or more mating protrusions 502. According to an embodiment, the one or more guide tracks 502a are integrally formed on an inner portion of the housing 402 which mates with the lens unit 404. In some examples, the one or more guide tracks 502a may be U-Shaped or C- shaped grooves. In some examples, an inner portion of the housing 402 may be flat without any shaped grooves. The guide tracks 502a may guide the ball bearings 408a. In this regard, the ball bearings 408a may allow the lens unit 404 to slidably displace along the optical axis 411 within the casing.

According to an embodiment, the front end of the housing 402 may receive the first nut and the rear end of the housing 402 may receive the second nut. According to an embodiment, the one or more first threaded portions 501 are formed integrally on the front end 503 of the first housing 402.

According to an embodiment, a rear cover 417 may be coupled to the rear end 505 of the housing 402. The rear end of the housing may include the one or more first threaded portions 501. In some examples, the rear end 505 may be provided with the one or more mating protrusions 502 to couple with the rear cover 417. In some examples, the rear cover 417 and the second nut 410 may be a single integrated structure which can be coupled to the rear end 505 of the housing 402. According to another embodiment, the rear end 505 of the housing 402 may include the one or more first threaded portions 501. According to embodiment, the one or more first threaded portions 501 are provided to rotatably couple the first nut 409 and the second nut 410 with the housing 402.

FIG. 6 illustrates a perspective view of one of the first nut 409 or the second nut 410 which may be rotatably coupled to the housing 402. In some examples, the first nut 409 and the second nut 410 may be structurally identical. According to an embodiment, the first nut 409 and the second nut 410 include one or more second threaded portions 420. The second threaded portions 420 may be integrally formed on the first nut 409 and the second nut 410. According to an embodiment, the one or more first threaded portions 501 mechanically couple with one or more second threaded portions 420 of one of the first nut 409 or the second nut 410. In some examples, the first threaded portions 501 may be female threaded portions and the second threaded portions 420 may be male threaded portions or vice-versa. In this regard, the second threaded portions 420 may be screwed or rotated into the first threaded portions 501 to mechanically couple the first nut 409 and the second nut 410 to the front end and the rear end of the housing 402 respectively.

According to an embodiment, the first nut 409 and the second nut 410 may include a key seat 602. The key seat 602 is provided to facilitate the screwing motion or the rotating motion of the first nut 409 and the second nut 410. For example, the key seat 602 may mate with a suitable key element which may rotate or screw the first nut 409 and the second nut 410 relative to the housing 402 in either a clockwise or an anticlockwise direction.

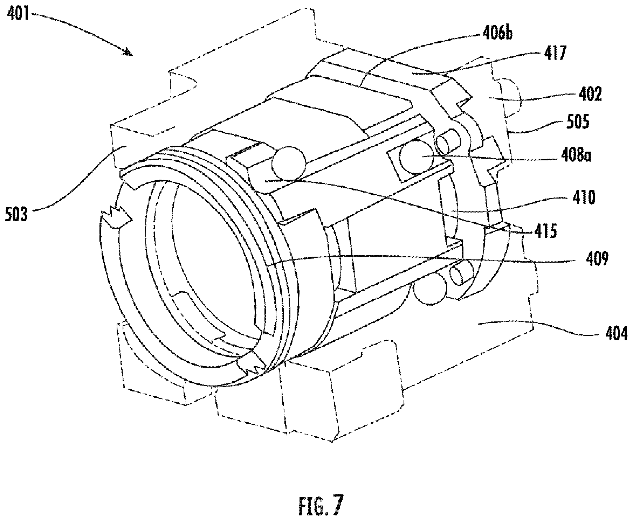

FIG. 7 illustrates a perspective view of the imaging assembly 401 with components discussed in conjunction with FIGS. 4, 5 and 6 in an assembled form. It is seen that the first nut 409 and the second nut 410 is coupled to the front end 503 and the rear end 505 of the housing 404 when assembled. FIG. 7 shows that the one or more ball bearings 408a are coupled to the outer portion 413 of the lens unit 404.

As shown in FIG. 7, the one or more ball bearing 408a mate with the inner portion of the housing 402 when assembled. In this regard, the ball bearings 408a may move on the corresponding guide tracks 502a on the first housing 402 when the lens unit 404 is positioned within the housing 402. According to an embodiment, the lens unit 404 is linearly slidable within the housing 402 using the one or more ball bearings 408a without any friction between the lens unit 404 and the housing 402 during the movement.

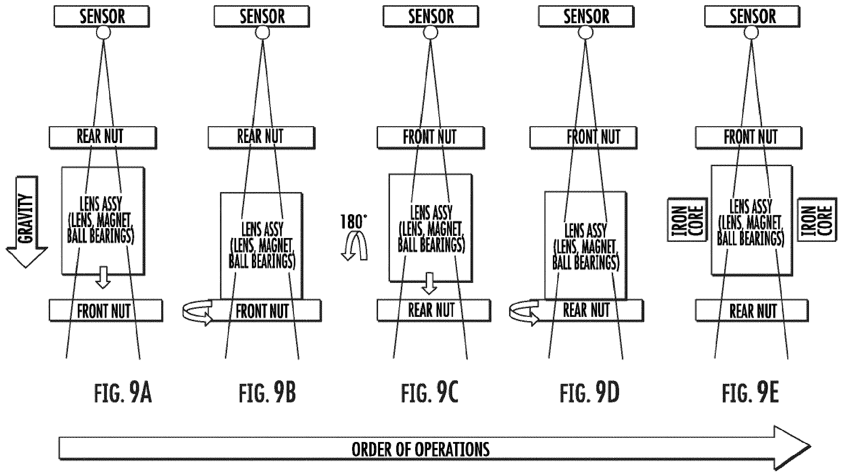

In some examples and during calibration, the lens unit 404 may be displaced within the housing 402 from one position to another position under a gravitational force or the magnetic force. According to an embodiment, the lens unit 404 may be displaced by gravity using the one or more ball bearings 408a to calibrate the lens unit to the optimal focal position. For example, the far-field focal position and the near-field focal position of the lens unit is pre-calibrated by the first nut 409 and the second nut 410 by displacing the lens unit 404 under gravity towards the first nut 409 and the second nut 410. Such a calibration method is described in conjunction with FIG. 9.

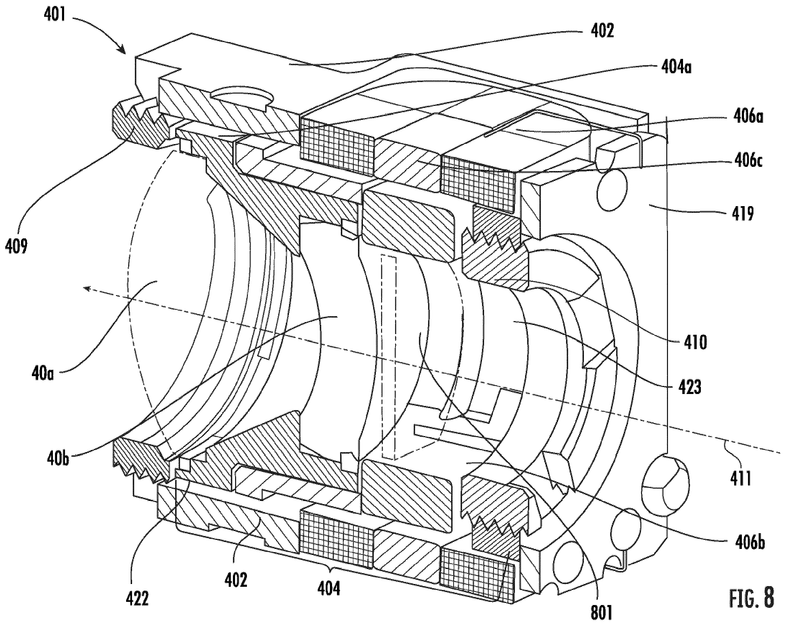

According to another embodiment, the lens unit 404 may be displaced by the magnetic force using the one or more ball bearings 408a to position the lens unit 404. For example, the lens unit 404 may be displaced either to the pre-calibrated far-field focal position or the near-field focal position by the drive mechanism 406 when the imaging assembly 401 is deployed for capturing an image of the target. Such a displacement of the lens unit 404 by applying the magnetic force is described in conjunction with FIG. 8.

FIG. 8 illustrates a fragmentary partially cutaway view of the imaging assembly 401 of FIG. 7 in the assembled form showing one or more optical components positioned within the inner portion of the lens unit 404. As discussed previously, the lens unit 404 is capable of being actuated to a default or home focal position, the front stop (near-field focal position) and/or the rear stop (far-field focal position. The near-field focal position and/or the far-field focal position may be pre-calibrated.

. According to an embodiment, the lens unit 404 may be displaced from the default focal position to either the far-field focal position or the near-field focal position by applying the magnetic force. The magnetic force is provided by the driving mechanism 406.

As shown in FIG. 8, the drive mechanism 406, which includes a pair of magnets 406b, is attached to the outer portion 413 of the lens unit 404. The pair of coils 406a with the iron cores 406c are attached to the housing 402. According to an embodiment, the magnets 406b may be positioned in a spaced-apart confronting relationship with the coils 406a. According to an embodiment, lens unit 404 may be pre-calibrated using the first nut 409 and the second nut 410 attached to the housing 404 at the front end 503 or front stop and the back end 505 or rear stop respectively before applying the magnetic force. Such a calibration locates the far-field focal position or the near-field focal position of the lens unit 404.

When the imaging assembly 401 is in operation, the lens unit 404, which comprises a pair of lenses 40a, 40b and the optical filter 801, is attached to an inner portion of the lens unit 404, may be actuated to move either to the far-field focal position or the near-field focal position based on the location of the target to be captured by the imaging assembly 401. For example, the lens unit 404 may be set to the default focal position while initiating an image capture of the target. As shown in FIG. 8, the lens unit is held at the default focal position by a magnetic attraction between the magnets 406b and the iron cores 406c. In this regard, when the lens unit 404 is to be displaced to either the far-field focal position or the near-field focal position based on the location of the target, the coils 406a are energized to move the lens unit 404 from the default focal position.

For example, electrical current is applied to the coils 406a and an electromagnetic field set up by the current flowing through the coils 406a causing a magnetic repulsive force to displace the lens unit 404 and the magnets 406b relative to the coils 406a. Such a magnetic force may displace the lens unit 404 causing it to linearly slide within the housing 402 toward the first nut 409 or the second nut 410. In this regard, the displacement of the lens unit 404 towards the first nut 409 or front stop is indicative of the lens unit being located at the far-field focal position and the displacement of the lens unit 404 towards the second nut 410 or rear stop is indicative of the lens unit 404 being located at the near-field focal position. Therefore, the lens unit 404 is displaced in the optical axis direction by virtue of an interaction between the magnetic field generated by the electricity flowing through the coils 406a and the magnetic field of the magnets 406b. According to an embodiment, when the current stops flowing through the coils 406a, the lens unit 404 may return to the default focal position.

FIGS. 9A-9E illustrate a block schematic diagram depicting exemplary calibration method of the imaging assembly discussed in conjunction with FIGS. 7 and 8, in accordance with an embodiment of the present subject matter. FIGS. 9A-9E are symbolic representations of the imaging assembly 401 with the lens unit 404, the first nut 409 and the second nut 410. Such symbolic representations are illustrated for the purpose of ease of explanation of the calibration techniques of the lens unit 404 and should not be considered to limit the scope of the present disclosure. In FIGS. 9A-9E, it is shown that the imaging assembly 401 may be titled vertically to displace the lens unit 404 under gravity towards the first nut 409 or the second nut 410. In some examples, the one or more ball bearings 408a slides the lens unit 404 such that the lens unit 404 may move toward the front end 503 or the back end 505 of the housing 402 without any friction to mate with the first nut 409 and the second nut 410.

In the example embodiment shown in FIGS. 9A-9D, the lens unit 404 is calibrated using the first nut 409 and the second nut 410. The first nut 409 and the second nut 410 are rotated to calibrate the far-field focal position and the near-field focal position of the lens unit 404. In some examples, the lens unit 404 may be rotated to 180-degree allowing the lens unit 404 to move toward the second nut 410 under gravity before calibrating the near-field focal position of the lens unit 404. The 180-degree rotation may also occur before calibrating the far-field focal position of the lens unit 404.

In some examples, calibration may involve the step of monitoring a focal point of the optical radiation on the image sensor 132. The optical radiation is symbolically represented using two lines (i.e., a ray of reflected light from the target). The two lines converge at a point represented by a circle which may be the focal point. The focal point is incident on the image sensor 132. In other words, a focal length between the image sensor 132 and the at least one lens 40 of the lens unit 404 is constant and precise as the focal point is in alignment with the image sensor 132.

Accordingly and during calibration, the first nut 409 and the second nut 410 may be rotated to until a focal point of the optical radiation is in alignment with the image sensor 132 to register the far-field focal position and the near-field focal position respectively. In this regard, the rotation of the first nut 409 and the second nut 410 linearly pushes the lens unit 404 displaced by gravity to register the far-field focal position and the near-field focal position of the lens unit 404. The position of the first nut 409 and the second nut 410 thus signify the far-field focal position and the near-field focal position of the lens unit 404 and, thus, can be used to stop the lens units at those positions during operation.

FIGS. 9B and 9D show symbolic representations of the first nut 409 and the second nut 410 being rotated to calibrate the far-field focal position and the near-field focal position of the lens unit 404. In this regard, the first nut 409 and the second nut 410 are provided as part of the housing 402 to calibrate and register the optimal focal positions for the lens unit 404 at ease without the need of a complex hardware, in some examples, thereby eliminating the requirement of a laborious task for calibration.

Further, the ball bearings 408a are provided to the lens unit 404 such that the lens unit 404 is freely movable without any friction within the housing 402 which enables smooth transition of the lens unit 404 to different focal positions. FIG. 9E shows a symbolic representation of the lens unit 404 at the default position after completing the pre-calibration. The lens unit 404 is held in the default position by the interaction between the magnets 406b and the iron core 406c. The lens unit 404 may be displaceable between the default focal position and the near-field/far-field focal position under the influence of a magnetic force as discussed in conjunction with FIG. 8. In this regard, the imaging assembly 401 disclosed in the examples herein may be self-sufficient to provide an arrangement for both calibration and auto-adjustments of the focal positions.

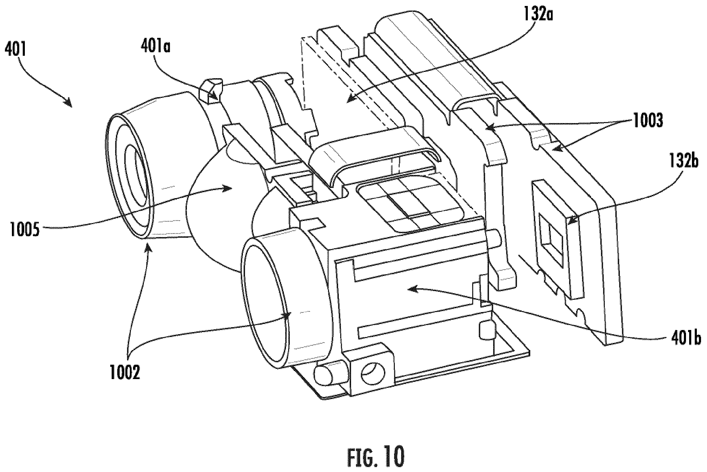

FIG. 10 illustrates a perspective view of a dual-mode imaging system of an exemplary optical apparatus 112 employing the imaging assembly 401 of FIG.4, in accordance with an embodiment of the present subject matter. The optical apparatus 112 may permit multiple focusable fields of view using the dual-mode imaging system. In the example embodiment, the dual-mode imaging system has a near-field and a far-field image sensor 132a, 132b. The dual-mode imaging system may be configured to read, for example, a bar code, optical characters, or an RFID tag. As shown in FIG. 10, the imaging system includes a near-field imaging assembly 401a and a far-field imaging assembly 401b. According to an embodiment, the near-field imaging assembly 401a and the far-field imaging assembly 401b may include at least one lens 40 positioned along the optical axis 411 to focus the optical radiation at the focal point on the near-field image sensor 132a and the far-field image sensor 132b respectively. In some examples, the near-field image sensor 132a and the far-field image sensor 132b may include a plurality of photo detectors arranged in a matrix which captures photons from the optical radiation and outputs electronic signals.

The near-field image sensor 132a and the far-field image sensor 132b may be mounted to a corresponding a PCB (Printed Circuit Board) 903. The image sensors 132a, 132b are electrically and mechanically connected with the corresponding printed circuit board 1003, wherein the printed circuit board 1003 may include one or more active and passive electronic circuits for processing the electrical signals from the image sensors 132a, 132b. The combined output from the electronic circuits may be processed by a signal processing circuitry to obtain an image output. In some examples, the image sensors 132a, 132b may be a charge coupled device (CCD) or a complementary metal oxide semiconductor (CMOS).

As shown in FIG. 10, the dual-mode imaging system further includes illuminator lens 1005 mounted in a same plane as the image sensors 132a, 132b in between the imaging assemblies 401a, 401b. In some examples, the illuminator lens 1005 may include a lens array positioned in front of an illuminating source, for example, light emitting diodes (LEDs) to uniformly distribute the optical radiation or the light within a target area. Additionally, the near-field imaging assembly 401a and the far-field imaging assembly 401b may include a compressible rubber gasket 1002 positioned in a manner to contact or seal with at least one lens 40 of the imaging assembly 401.

As shown in the example embodiment of FIG. 10, one of the imaging assemblies 401a, 401b or both of the imaging assemblies 401a, 401b may include the lens unit 404 and may be calibrated as discussed previously in conjunction with the preceding figures to provide the imaging assemblies 401a, 401b provisions to perform both the far-field focus and near-field focus with ease of calibration.

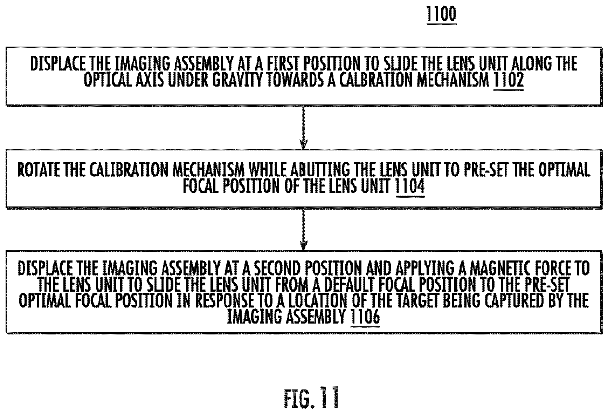

FIG. 11 illustrates a flowchart of an exemplary method of for calibrating a lens unit of an imaging assembly at an optimal focal position, in accordance with an embodiment of the present subject matter. As discussed previously, the lens unit of the imaging assembly may be calibrated using a calibration mechanism including a first nut and the second nut. The first nut and the second nut preregisters the optimal focal position of the lens unit. The imaging assembly includes a driving mechanism to actuate the lens unit to the optimal focal positions.

At step 1102, the lens unit of the imaging assembly is displaced under gravity when the imaging assembly tilted to a first position. The first position may be a vertical oriented position. The lens unit may slide along the optical axis under gravity towards a calibration mechanism when tilted to the first position. In some examples, the lens unit may free fall without any friction towards the calibration mechanism using the one or mor ball bearings attached to the lens unit. The calibration mechanism includes one of a first nut or a second nut.

At step 1104, the calibration mechanism may be rotated while abutting the lens unit to calibrate the optimal focal position of the lens unit. The optimal focal position being one of a near-field focal position or a far-field focal position. For example, the near-field focal position of the lens unit is registered using the second nut and the far-field focal position of the lens unit is registered using the first nut. In this regard, the step of pre-calibrating the lens unit is performed at ease with the use of the first nut, second nut and the ball bearings.

At step 1106, the imaging assembly may be displaced to a second position and held in that position by magnetic force. The second position may be the default focal position.

The lens unit may be positioned at the default focal position and a magnetic force is applied to the lens unit to slide the lens unit from the default focal position to the calibrated optimal focal position in response to a location of the target being captured by the imaging assembly. For example, based on the location of the target, the drive mechanism may provide a magnetic force to move the lens unit toward the first nut or towards the second nut to position the lens unit at the calibrated near-field focal position or a far-field focal position. The magnetic force may be applied by selectively energizing coils and magnets positioned within a housing of the imaging assembly. In this regard, the imaging assembly is provided with the capability to move to the lens unit to the near-field focal position or a far-field focal position pre-calibrated at ease by the first nut and the second nut.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The foregoing description of an embodiment has been presented for purposes of illustration and description. It is not intended to be exhaustive or to limit the invention to the precise form disclosed. Obvious modifications or variations are possible in light of the above teachings. The embodiment was chosen and described in order to best illustrate the principles of the invention and its practical application to thereby enable one of ordinary skill in the art to best utilize the invention in various embodiments and with various modifications as are suited to the particular use contemplated. Although only a limited number of embodiments of the invention are explained in detail, it is to be understood that the invention is not limited in its scope to the details of construction and arrangement of components set forth in the preceding description or illustrated in the drawings. The invention is capable of other embodiments and of being practiced or carried out in various ways. Also, in describing the embodiment, specific terminology was used for the sake of clarity. It is to be understood that each specific term includes all technical equivalents which operate in a similar manner to accomplish a similar purpose.

## Claims

1. An optical apparatus comprising:
an image sensor; and
an imaging assembly to focus an optical radiation from a target on to the image sensor, wherein the imaging assembly comprises:
a housing;
a lens unit configured to be actuated to one of a far-field focal position and a near-field focal position by applying a magnetic force, wherein the lens unit comprises:
one or more ball bearings attached to the lens unit to slideably displace the lens unit within the housing along an optical axis in response to the magnetic force; and
a first nut and a second nut rotatably attached to the housing, wherein the far-field focal position and the near-field focal position of the lens unit is calibrated based on the position of the first nut and the second nut.

2. The optical apparatus of claim 1, wherein the housing comprises one or more guide tracks to guide the one or more ball bearings.

3. The optical apparatus of claim 1, wherein the imaging assembly further comprises a drive mechanism comprising one or more coils attached to the housing and one or more magnets attached to the lens unit, wherein the coils and the magnets are energized at selected voltage levels to produce the magnetic force.

4. The optical apparatus of claim 1, wherein the one or more ball bearings is rotatably attached to one or more dents formed integrally on an outer portion of the lens unit.

5. The optical apparatus of claim 1, wherein the lens unit further comprises an optical filter positioned along the optical axis with the at least one lens to pass the optical radiation of pre-defined wavelength.

6. An imaging assembly, comprising
a housing;
a lens unit mounted within the housing, wherein the lens unit comprises:
at least one lens positioned along an optical axis;
one or more ball bearings attached to the lens unit to slideably displace the lens unit within the housing along the optical axis; and
a calibration mechanism positioned at one end of housing to calibrate the at least one lens by positioning the lens unit at an optimal focal position, wherein the calibration mechanism is rotated to slidably displace the lens unit and position the lens unit at the optimal focal position, and wherein the optimal focal position is one of a near-field focal position or a far-field focal position.

7. The imaging assembly of claim 6, further comprises: a drive mechanism comprising one or more coils attached to the housing and one or more magnets attached to the lens unit.

8. The optical apparatus of claim 6, wherein the one or more ball bearings to linearly displace the lens unit along the optical axis in response to one of a magnetic force or a gravitational force, wherein the magnetic force is induced by selectively energizing the coils and the magnets.

9. A method for pre-calibrating and positioning a lens unit of an imaging assembly at an optimal focal position comprising:
displacing the imaging assembly at a first position to slide the lens unit along the optical axis under gravity towards a calibration mechanism;
rotating the calibration mechanism while abutting the lens unit to calibrate the optimal focal position of the lens unit, wherein the optimal focal position is one of a near-field focal position or a far-field focal position; and
displacing the imaging assembly at a second position and applying a magnetic force to the lens unit to slide the lens unit from a default focal position to the calibrated optimal focal position in response to a location of the target being captured by the imaging assembly.

10. The method of claim 9, wherein applying the magnetic force further comprises:
selectively energizing coils and magnets positioned within a housing of the imaging assembly.
